(19) Europäisches Patentamt
European Patent Office
Office européen des brevets

(11) **EP 4 692 767 A1**

(12) **EUROPEAN PATENT APPLICATION**
published in accordance with Art. 153(4) EPC

(43) Date of publication:
**11.02.2026 Bulletin 2026/07**

(21) Application number: **24778968.8**

(22) Date of filing: **27.02.2024**

(51) International Patent Classification (IPC):
*G01N 21/64* (2006.01)     *G01N 1/10* (2006.01)
*G01N 35/08* (2006.01)     *G01N 37/00* (2006.01)

(52) Cooperative Patent Classification (CPC):
**G01N 1/10; G01N 21/64; G01N 35/08; G01N 37/00**

(86) International application number:
**PCT/JP2024/007096**

(87) International publication number:
**WO 2024/202827 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023058002**

(71) Applicant: **FUJIFILM Corporation
Tokyo 106-8620 (JP)**

(72) Inventors:
• **ISOZAKI, Naoto
Ashigarakami-gun, Kanagawa 258-8538 (JP)**
• **ETO, Daisuke
Ashigarakami-gun, Kanagawa 258-8538 (JP)**

(74) Representative: **Dehns Germany Partnerschaft
mbB
Theresienstraße 6-8
80333 München (DE)**

(54) **ANALYSIS DEVICE**

(57)     An analysis apparatus includes an electrophoresis mechanism that subjects the specimen supplied to the flow channel to electrophoresis, a light detection unit including a photodetector that detects light from a detection site in the flow channel and an objective lens that guides the light from the detection site to the photodetector, a support plate that supports a surface of the measurement chip that faces the objective lens and that has an opening through which the light from the detection site is transmitted to the objective lens, the opening being formed in a portion that faces the objective lens, and a heat conduction member that is disposed in the opening of the support plate and that has thermal conductivity for conducting heat from the detection site to the support plate and light transmittance for transmitting the light, the heat conduction member having a thermal conductivity of 1.0 W/m·K or more and a light transmittance of 60% or more.

FIG. 1

**Description**

**BACKGROUND OF THE INVENTION**

1. Field of the Invention

The present disclosure relates to an analysis apparatus.

2. Description of the Related Art

A micro-total analysis system ($\mu$TAS) is known as an analysis apparatus that analyzes a specimen such as a biological specimen. The $\mu$TAS is an analysis apparatus that uses a measurement chip comprising a micro flow channel to carry out a series of chemical or biochemical analysis steps within the flow channel of the measurement chip, such as mixing of a specimen and a reagent, a chemical reaction or a biochemical reaction, and detection of a product after the reaction. The measurement chip is loaded into the analysis apparatus, and various processes are executed within the analysis apparatus, such as a specimen dispensing process of dispensing a specimen, a reagent dispensing process of dispensing a reagent, a process for causing a specimen and a reagent to react with each other, and an optical detection process. In the process for causing the specimen and the reagent to react with each other and the optical detection process, the reaction may be accelerated using electrophoresis and reactants may be separated.

A gel for electrophoresis of the reactants is contained in a part of the flow channel of the measurement chip on which an electrophoresis-based process is carried out, and the reactants are separated by electrophoresis in the flow channel. During this electrophoresis, a voltage is applied to both ends of the flow channel, so that Joule heat is generated in the flow channel. In a case where a temperature in the flow channel increases due to the Joule heat, conditions, such as a reaction rate and a migration speed, change, which may cause an error in a detection result.

Therefore, JP1997-288091A (JP-H9-288091A) discloses an electrophoresis apparatus comprising a temperature control jacket that is provided to sandwich a flat plate gel, which consists of a gel for performing gel electrophoresis and a pair of flat plates that hold the gel to be sandwiched, from both sides. A configuration has been proposed in which a slit is provided in the temperature control jacket and optical detection is performed through the slit.

**SUMMARY OF THE INVENTION**

In JP1997-288091A (JP-H9-288091A), a temperature of the flat plate gel is adjusted by providing the temperature control jacket, but, since the temperature control jacket is provided with the slit, a detection site of the flat plate gel corresponding to the slit portion cannot be controlled in temperature, and the detection error is not sufficiently suppressed.

An object of the present disclosure is to provide an analysis apparatus that can suppress, compared to the related art, a decrease in measurement performance caused by Joule heat generated during electrophoresis in a case where optical detection is carried out while reactants are separated by electrophoresis.

According to the present disclosure, there is provided an analysis apparatus that uses a measurement chip equipped with a flow channel containing a gel for electrophoresis and that optically detects a test target substance in a specimen supplied to the flow channel of the measurement chip while carrying out component separation using electrophoresis on the specimen, the analysis apparatus comprising: an electrophoresis mechanism that subjects the specimen supplied to the flow channel to electrophoresis; a light detection unit including a photodetector that detects light from a detection site in the flow channel and an objective lens that guides the light from the detection site to the photodetector; a support plate that supports the measurement chip and that has an opening through which the light from the detection site is transmitted to the objective lens; and a heat conduction member that is disposed in the opening of the support plate and that has thermal conductivity for conducting heat from the detection site to the support plate and light transmittance for transmitting the light, the heat conduction member having a thermal conductivity of 1.0 W/m·K or more and a light transmittance of 60% or more.

In the analysis apparatus, the flow channel in the measurement chip may be a microchannel.

The analysis apparatus may further comprise: a plate temperature control unit that controls a temperature of the support plate.

The analysis apparatus may further comprise: a lens temperature control unit that controls a temperature of the objective lens.

In the analysis apparatus, it is preferable that the heat conduction member includes a plate-like member and a film-like member having higher flexibility than the plate-like member, and in a case where the measurement chip is supported to face the objective lens, the film-like member comes into contact with the measurement chip.

In a case where the heat conduction member is a first heat conduction member, the analysis apparatus may further comprise a second heat conduction member having a thermal conductivity of 1.0 W/m·K or more, which is in contact with a surface of the measurement chip opposite to a surface in contact with the first heat conduction member.

The analysis apparatus may further comprise: a gel-like or paste-like material having a thermal conductivity of 1.0 W/m·K or more between the heat conduction member and the support plate.

In the analysis apparatus, the support plate may include a fin on a surface other than a support surface that supports the measurement chip.

The analysis apparatus may further comprise: a cleaning mechanism that cleans a surface of the heat conduction member that comes into contact with the measurement chip.

In the analysis apparatus, the light detection unit may include a light source that outputs excitation light to be emitted to the detection site, and the photodetector may detect fluorescence from the detection site.

According to the analysis apparatus of the present disclosure, it is possible to suppress, compared to the related art, a decrease in measurement performance caused by Joule heat generated during electrophoresis in a case where optical detection is carried out while reactants are separated by electrophoresis.

## BRIEF DESCRIPTION OF THE DRAWINGS

FIG. 1 is a schematic diagram showing an overall configuration of an analysis apparatus according to an embodiment.
FIG. 2 is an exploded perspective view of a measurement chip.
FIG. 3 is a perspective view of the measurement chip.
FIG. 4 is an explanatory diagram of processing steps in the measurement chip.
FIG. 5 is an explanatory diagram of processing steps in the measurement chip.
FIG. 6 is a graph showing a change in fluorescence intensity over time.
FIG. 7 is a schematic diagram showing Modification Example 1 of the analysis apparatus.
FIG. 8 is a schematic diagram showing Modification Example 2 of the analysis apparatus.
FIG. 9 is a schematic diagram showing Modification Example 3 of the analysis apparatus.
FIG. 10 is a schematic diagram showing Modification Example 4 of the analysis apparatus.
FIG. 11 is a schematic diagram showing Modification Example 5 of the analysis apparatus.
FIG. 12 is a graph showing a change in conductivity over time.
FIG. 13 is a graph showing a change in fluorescence intensity over time.
FIG. 14 is a diagram showing a voltage dependence of separation performance R.
FIG. 15 is a diagram showing a voltage dependence of electrophoresis time.

## DESCRIPTION OF THE PREFERRED EMBODIMENTS

Hereinafter, an analysis apparatus according to an embodiment of the present disclosure will be described with reference to the drawings.

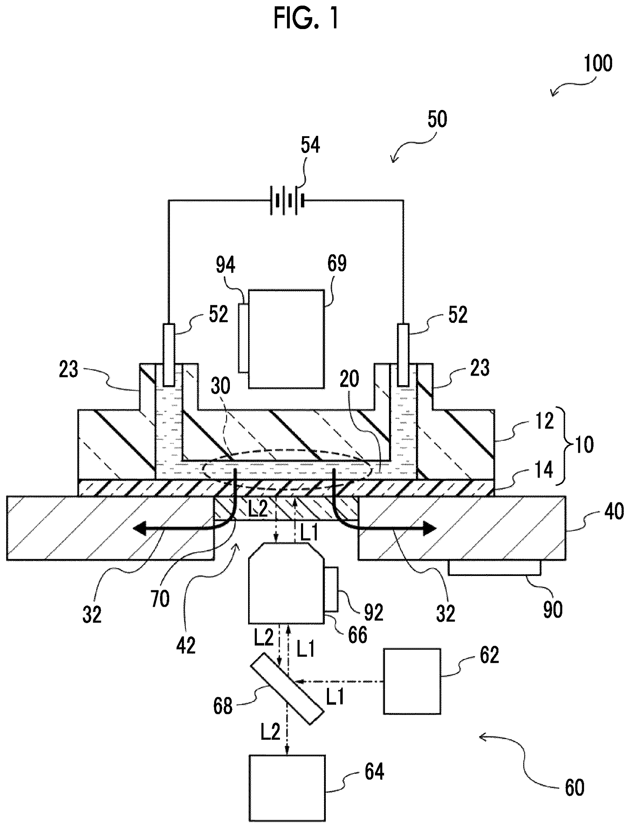

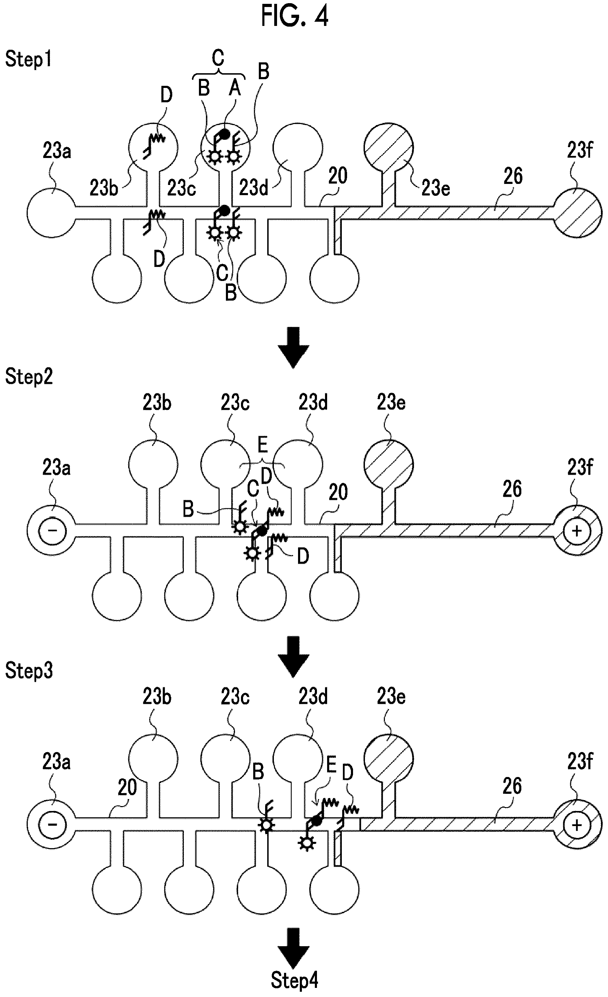

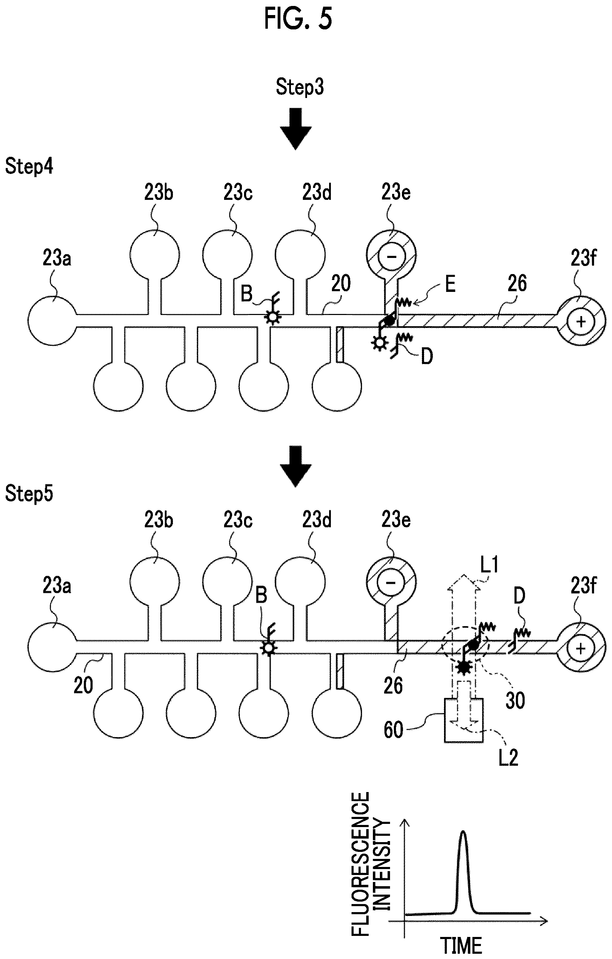

FIG. 1 is a schematic diagram showing a schematic configuration of an analysis apparatus 100. The analysis apparatus 100 is, for example, an immunoassay apparatus that detects a test target substance in a specimen by using an antigen-antibody reaction. The analysis apparatus 100 dispenses a specimen and a reagent into a measurement chip 10, causes mixing and an immune reaction in a microchannel 20 in the measurement chip 10, optically detects the test target substance in the specimen (see FIGS. 4 and 5), and outputs a test result. The specimen is, for example, a biological specimen such as blood collected from a living body.

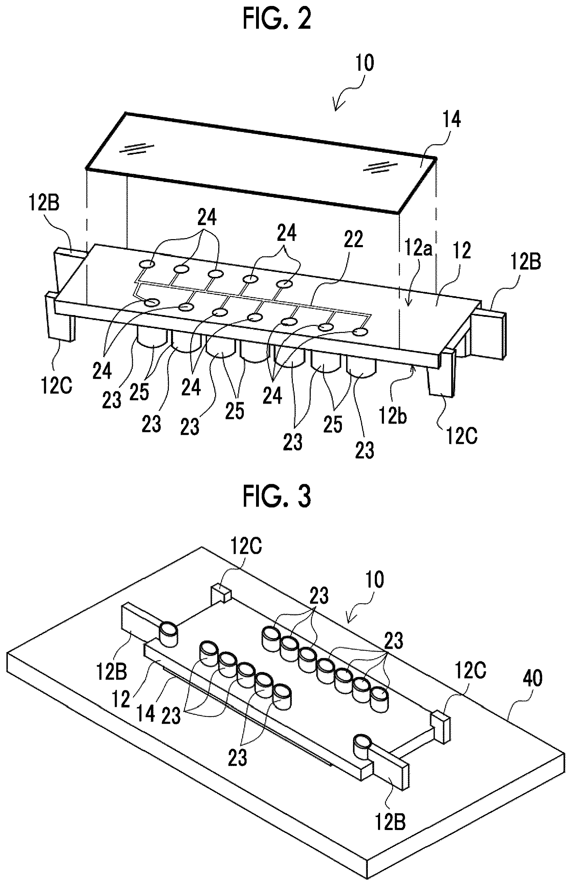

The measurement chip 10 is a microchannel device comprising a microchannel 20 therein, and is, for example, a measurement chip for µTAS. As an example, a reagent such as a labeled antibody solution and a buffer solution is introduced into the microchannel 20 in addition to the specimen. The measurement chip 10 in FIG. 1 is a schematic diagram showing a main configuration. Hereinafter, a specific configuration example of the measurement chip 10 will be described with reference to FIGS. 2 and 3.

[Measurement Chip]

FIG. 2 is an exploded perspective view of the measurement chip 10. In addition, FIG. 3 is a perspective view showing a state in which the top and bottom of the measurement chip 10 shown in FIG. 2 are reversed and placed on a support plate 40.

As shown in FIG. 2, the measurement chip 10 includes a body member 12 and a film 14. The measurement chip 10 is placed on the support plate 40 with a surface on the film 14 side as a bottom surface as shown in FIG. 3 during measurement. For convenience of description, in FIG. 2, the measurement chip 10 is shown with the bottom surface facing up.

The body member 12 is provided with a groove 22 that constitutes a part of the microchannel 20 and a plurality of wells 23. The groove 22 is, for example, a groove having a width of several tens of μm to several hundreds of μm and a depth of several tens of μm. The well 23 consists of a through-hole 24 that penetrates from one surface 12a of the body member 12 to the other surface 12b which is a back surface thereof, and a cylindrical portion 25 where an opening peripheral edge of the through-hole 24 protrudes from a surface on the other surface 12b side. Support ribs 12B and 12C that serve as support portions in a case where the measurement chip 10 is placed on the support plate 40 with the film 14 side as a bottom surface are provided on both sides of the body member 12.

The film 14 is bonded to the one surface 12a of the body member 12 on which the groove 22 and the well 23 are formed so as to cover the groove 22 and the through-hole 24 (see FIGS. 2 and 3). As a result, a portion of the groove 22 and the through-hole 24 that is open on the one surface 12a is sealed, and the microchannel 20 (see FIG. 1) is formed.

FIGS. 4 and 5 are explanatory diagrams of a process carried out in the microchannel 20 of the measurement chip 10 loaded into the analysis apparatus 100. In FIGS. 4 and 5, the microchannel 20 and the well 23 are schematically shown. For convenience of description, wells 23 that need to be distinguished are given reference numerals a, b, c, and the like.

As shown in Step 1 of FIG. 4, first, a reagent and a specimen are dispensed from predetermined wells 23a to 23f, and pressure is applied to fill the microchannel 20 with liquid. As an example, a reagent containing a deoxyribonucleic acid (DNA)-labeled antibody D is dispensed into the well 23b, and a mixture of a specimen and a reagent containing a fluorescently labeled antibody B is dispensed into the well 23c. In a case where the mixture dispensed into the well 23c contains an antigen A, which is a substance to be detected, an immune complex C bound to the fluorescently labeled antibody B is formed. As described above, the microchannel 20 is filled with various liquids, and a portion indicated by diagonal lines in the microchannel 20 is filled with a gel 26 for capillary gel electrophoresis in a subsequent step (hereinafter, referred to as an electrophoresis gel 26). In the other steps of FIGS. 4 and 5 as well, a portion indicated by diagonal lines in the microchannel 20 is filled with the electrophoresis gel 26.

Next, as shown in Step 2 of FIG. 4, cathode electrodes are inserted into the well 23a and anode electrodes are inserted into the well 23f, a voltage is applied between the wells 23a and 23f to carry out isotachophoresis (ITP). As a result, the negatively charged DNA-labeled antibody D migrates to the anode while being concentrated, and the antigen A and the DNA-labeled antibody D are bound to each other by the antigen-antibody reaction to form a sandwich-type immune complex E.

Further, as shown in Step 3 of FIG. 4, the uncharged fluorescently labeled antibody B does not migrate, and the DNA-labeled antibody D and the immune complex E containing the DNA-labeled antibody D migrate to the anode, thereby achieving B/F separation.

As shown in Step 4 of FIG. 5, the moment a concentrated layer containing the immune complex E reaches a branch point of the well 23e, the cathode is switched from the well 23a to the well 23e, and isotachophoresis is switched to capillary gel electrophoresis.

Thereafter, as shown in Step 5 of FIG. 5, component separation is performed due to a molecular sieve effect of capillary gel electrophoresis, and the charged substances in the microchannel 20 migrate at a speed corresponding to its molecular weight. The light detection unit 60 irradiates a detection site 30 between the well 23e and the well 23f with excitation light L1 and detects fluorescence L2 generated from the detection site 30 in response to the irradiation with the excitation light L1. The fluorescence L2 is generated from a fluorescent label contained in the immune complex E that passes through the detection site 30. The light detection unit 60 acquires a change in fluorescence intensity over time. Since the time taken to reach the detection site 30 varies depending on a difference in molecular weight, the antigen A can be specified from a time point at which a peak is exhibited in the change in fluorescence intensity over time, and the amount of the antigen A can be derived from the fluorescence intensity.

Returning to FIG. 1, a configuration of the analysis apparatus 100 will be described. The analysis apparatus 100 comprises the support plate 40 that supports the measurement chip 10, an electrophoresis mechanism 50, and the light detection unit 60.

The support plate 40 supports the measurement chip 10. The measurement chip 10 is placed on the support plate 40 in a posture in which the film 14 is in contact with the surface of the support plate 40. The support plate 40 has an opening 42 for carrying out optical detection, and the measurement chip 10 is placed such that the detection site 30 matches the opening 42. The support plate 40 is made of a member having thermal conductivity, such as metal or ceramics. The support plate 40 is preferably made of metal that is easy to process and that has a high thermal conductivity. The thermal conductivity of the support plate 40 is, for example, 1.0 W/m·K or more, and preferably 5.0 W/m·K or more.

The electrophoresis mechanism 50 comprises a plurality of electrodes 52 and a high-voltage power supply 54 for applying a voltage between the electrodes 52. The electrode 52 is an electrode that is inserted into a predetermined well 23 for the above-mentioned isotachophoresis or capillary gel electrophoresis. The electrophoresis mechanism 50 comprises an electrode moving unit (not shown) for inserting or removing the electrode 52 into or from the well 23.

The light detection unit 60 comprises a light source 62 that outputs the excitation light L1, a photodetector 64 that detects the fluorescence L2, an objective lens 66, a dichroic mirror 68, and a trap 69. The light source 62 is, for example, a semiconductor laser that outputs laser light as the excitation light L1 or a light emitting diode.

The objective lens 66 is disposed such that a part of the objective lens 66 is inserted into the opening 42 of the support plate 40. The objective lens 66 is disposed at a position facing the detection site 30 in a case where the measurement chip 10 is placed on the support plate 40. The objective lens 66 irradiates the detection site 30 with the excitation light L1 and guides the fluorescence L2 from the detection site 30 to the photodetector 64.

The photodetector 64 is disposed such that a light-receiving surface thereof is perpendicular to an optical axis of the objective lens 66. As the photodetector 64, a photodiode, a photomultiplier tube, an image sensor, or the like is used.

The dichroic mirror 68 is disposed between the objective lens 66 and the photodetector 64 such that an incident surface thereof is inclined by 45° with respect to the optical axis of the objective lens 66. The dichroic mirror 68 transmits the fluorescence L2 and reflects the excitation light L1. The light source 62 is disposed at a position where the excitation light L1 is incident on the incident surface of the dichroic mirror 68 at an incidence angle of 45°. The dichroic mirror 68 reflects the excitation light L1 toward the objective lens 66, and the detection site 30 is irradiated with the excitation light L1 via the objective lens 66.

The trap 69 is disposed at a position facing the objective lens 66. The trap 69 is a light absorbing body that absorbs light that passes through the measurement chip 10 out of the excitation light L1, and light that is output to the trap 69 out of the fluorescence generated from the detection site 30, and the like. The provision of the trap 69 suppresses repeated reflection and/or scattering, within the apparatus, of light output above the measurement chip 10, thereby preventing adverse effects on fluorescence detection.

As described above, the light detection unit 60 irradiates the detection site 30 of the microchannel 20 with the excitation light L1 and detects the fluorescence L2 generated by the irradiation with the excitation light L1. The detection of the fluorescence L2 is carried out for a predetermined time from the start of the capillary gel electrophoresis or after a predetermined time has elapsed since the start of the capillary gel electrophoresis. As a result, the light detection unit 60 acquires the change in fluorescence intensity over time.

A transparent heat conduction member 70 is disposed in the opening 42 of the support plate 40. The heat conduction member 70 has thermal conductivity for conducting heat from the detection site 30 to the support plate 40 and light transmittance for transmitting at least light from the detection site 30. The heat conduction member 70 has a thermal conductivity of 1.0 W/m·K or more and a light transmittance of 60% or more. Here, both the thermal conductivity and the light transmittance are values at room temperature (300 K). The thermal conductivity can be measured by a thermal conductivity measuring device. In addition, the light transmittance can be measured by a transmittance measuring instrument. In a case where a commercially available member is used as the heat conduction member 70, the thermal conductivity and the light transmittance need only be determined by referring to values of a thermal conductivity and a light transmittance listed in a catalog or the like provided by a member manufacturer. In this example, the light from the detection site 30 is the fluorescence L2. In this example, it is sufficient that the light transmittance of the excitation light L1 and the fluorescence L2 passing through the heat conduction member 70 is 60% or more. It is more preferable that the light transmittance for light in a visible range (wavelength of 380 nm to 800 nm) is 60% or more.

The material of the heat conduction member 70 is not limited, and examples thereof include glass (thermal conductivity of 1.1 W/m·K), ceramics (thermal conductivity of 11.4 W/m·K), sapphire (thermal conductivity of 37 W/m·K), and diamond (thermal conductivity of 2600 W/m·K). Table 1 shows a list of materials suitable for the heat conduction member 70. Note that the material of the heat conduction member 70 is not limited to the material shown in Table 1.

[Table 1]

| Material | Glass | Quartz | Sapphire | YAG | $Y_2O_3$ | $Sc_2O3$ | $Lu_2O3$ | Diamond |
|---|---|---|---|---|---|---|---|---|
| Thermal conductivity (W/m·K) | 1.1 | 1.6 | 37 | 11.4 | 14.7 | 17 | 12.2 | 2600 |

In the present embodiment, the heat conduction member 70 is a plate-like member, is fitted into the opening 42 of the support plate 40, comes into contact with the support plate 40, and is disposed to be substantially flush with the surface of the support plate 40.

Before the fluorescence detection from the detection site 30 is carried out, the measurement chip 10 is disposed on the support plate 40 such that the detection site 30 is positioned at a position corresponding to the heat conduction member 70. The detection site 30 of the measurement chip 10 is pressed against the heat conduction member 70, and capillary gel electrophoresis is performed in a state where the detection site 30 is in sufficient contact with the heat conduction member 70. In addition, the fluorescence detection from the detection site 30 is carried out while the component separation using capillary gel electrophoresis is performed.

As described above, the analysis apparatus 100 of the present embodiment is an analysis apparatus that uses the measurement chip 10 comprising a flow channel (here, the microchannel 20) containing the electrophoresis gel 26 and that optically detects a test target substance in a specimen supplied to the flow channel of the measurement chip 10 while carrying out component separation using electrophoresis on the specimen. In the analysis apparatus 100, the support plate 40 that supports the measurement chip 10 has the opening 42 through which the light from the detection site 30 is transmitted to the objective lens 66. The analysis apparatus 100 comprises the heat conduction member 70 that is disposed in the opening of the support plate 40 and that has thermal conductivity and light transmittance.

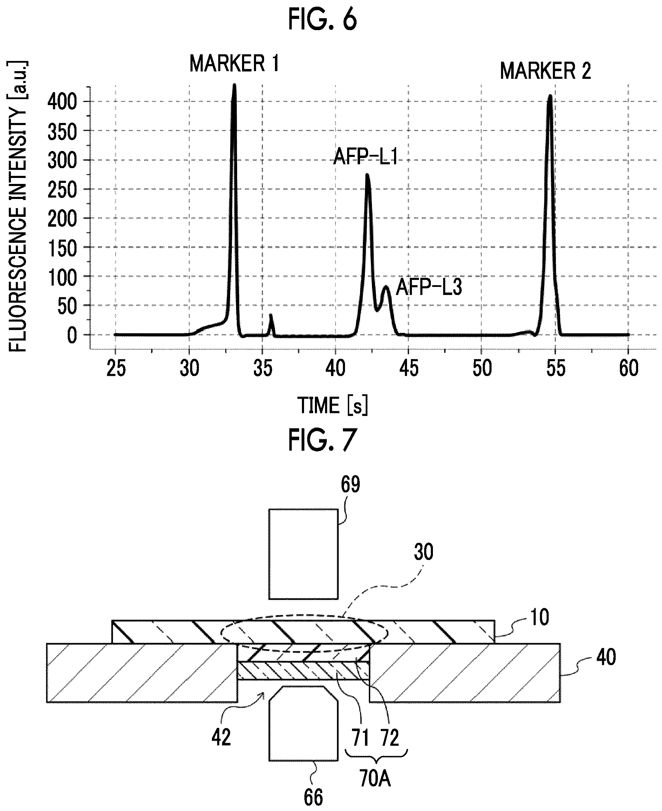

In the measurement chip 10, in a case where a voltage is applied to the flow channel for electrophoresis, Joule heat is generated. As described in the section of the background, in a case where a temperature in the flow channel increases due to the Joule heat, conditions, such as a reaction rate and a migration speed, change, resulting in deterioration in measurement performance. In addition, measurement reproducibility deteriorates due to temperature fluctuations caused by the increase in temperature. For example, FIG. 6 is a graph showing a change in fluorescence intensity with respect to a detection time for a specimen including a plurality of tumor markers (marker 1, marker 2, AFP-1, and AFP-3). In a case where $\alpha$-fetoprotein (AFP), which is a hepatocellular carcinoma marker, reacts with lectin, it is fractionated into a plurality of types (L1, L2, L3) according to differences in its binding affinity for lectin. Among these, AFP-L3 has a high detection rate for hepatocellular carcinoma, and thus a peak of AFP-L3 is used for determination of hepatocellular carcinoma. However, the binding affinity between lectin and AFP-L3 is temperature-dependent, and their binding capability between lectin and AFP-L3 decreases at an elevated temperature, resulting in decrease in separation performance from AFP-L1 and L2. As a result, this leads to deterioration of measurement performance in which the fluorescence peak of AFP-L3 decreases. The decrease in measurement performance in AFP-L3 may affect risk determination of hepatocellular carcinoma. In addition, in a case where a temperature of the liquid (here, the electrophoresis gel) in the flow channel fluctuates, the viscosity and conductivity change, which causes a detection time point of the fluorescence peak to fluctuate, thereby deteriorating the measurement reproducibility.

In the analysis apparatus 100 of the present embodiment, the heat conduction member 70 is provided in the opening 42 of the support plate 40 that supports the measurement chip 10. Therefore, in a case where the measurement chip 10 is supported by the support plate 40 such that the detection site 30 matches the opening 42, the heat conduction member 70 comes into contact with the detection site 30. In a case where electrophoresis is carried out in this state, Joule heat generated at the detection site 30 of the measurement chip 10 is transferred to the heat conduction member 70 and dissipated from the measurement chip 10. Therefore, Joule heat generated at the detection site 30 can be efficiently dissipated as compared with a case where the heat conduction member 70 is not provided in the opening 42. Since the bottom surface of the measurement chip 10 other than the detection site 30 is placed on the support plate 40 having thermal conductivity, Joule heat generated in a portion other than the detection site 30 is dissipated to the support plate 40. In this manner, an increase in liquid temperature due to Joule heat in a region of the measurement chip 10 where a voltage is applied can be suppressed. By suppressing the increase in liquid temperature, a decrease in measurement performance caused by Joule heat can be suppressed as compared with the related art, and the measurement performance can be improved. In addition, since Joule heat can be efficiently dissipated and the increase in liquid temperature can be suppressed, the voltage applied during electrophoresis can be increased, and, as a result, the measurement time can be shortened.

As shown in FIG. 1, in a case where the heat conduction member 70 is disposed in the opening 42 of the support plate 40 so as to be in contact with the support plate 40, Joule heat that has escaped from the detection site 30 to the heat conduction member 70 is dissipated to the support plate 40 side, which has a larger heat capacity, as indicated by an arrow 32 in the drawing. This suppresses an increase in temperature of the heat conduction member 70, enables efficient heat dissipation from the detection site 30, and suppresses fluctuations in liquid temperature in the flow channel of the measurement chip 10, thereby suppressing deterioration in measurement reproducibility.

The flow channel provided in the measurement chip 10 is not limited to a microchannel. However, in a case of the microchannel, the increase in liquid temperature due to Joule heat is remarkable, and the effect of improving measurement performance associated with the heat dissipation effect of the heat conduction member 70 is high.

As shown in FIG. 1, the analysis apparatus 100 may further comprise a plate temperature control unit 90 that controls a temperature of the support plate 40 that supports the measurement chip 10. In addition, the analysis apparatus 100 may further comprise a lens temperature control unit 92 that controls a temperature of the objective lens 66 disposed close to the detection site 30 of the measurement chip 10. Since the objective lens 66 is used in a state of being housed in a barrel, the lens temperature control unit 92 actually controls a temperature of the barrel. Further, the analysis apparatus 100 may further comprise a trap temperature control unit 94 that controls a temperature of the trap 69.

The plate temperature control unit 90, the lens temperature control unit 92, and the trap temperature control unit 94 can each be configured by a Peltier element or the like.

In a case where the plate temperature control unit 90 is provided, the temperature of the support plate 40 can be controlled to a set temperature, which is set in advance. By controlling the temperature of the support plate 40, the temperature of the measurement chip 10 placed on the support plate 40 can be made uniform, thereby improving the measurement performance. In addition, since the temperature of the measurement chip 10 during the measurement can be set to the same temperature every time, the measurement reproducibility can be improved.

In a case where the lens temperature control unit 92 and/or the trap temperature control unit 94 is provided, an atmosphere temperature around the measurement chip 10 can be controlled to a set temperature, which is set in advance.

By controlling the surrounding atmosphere temperature, the temperature of the measurement chip 10, that is, the liquid temperature in the flow channel can be made uniform. In addition, since the liquid temperature of the measurement chip 10 during the measurement can be set to the same temperature every time, the measurement reproducibility can be improved.

In particular, in a case where the plate temperature control unit 90, the lens temperature control unit 92, and the trap temperature control unit 94 are provided, the temperature of the measurement chip 10 and the atmosphere temperature around the measurement chip 10 can be made uniform, the effect of making the liquid temperature in the flow channel of the measurement chip 10 uniform is further improved, and the measurement reproducibility can be further improved.

The measurement chip 10 used in the analysis apparatus 100 of the present embodiment has a structure in which the film 14 is bonded to one surface of the body member 12, but the form of the measurement chip 10 is not limited to this. Any measurement chip may be used as long as it has an internal flow channel and is capable of optically detecting a substance to be detected at a detection site while carrying out electrophoresis. For example, the measurement chip may be configured such that the flow channel is formed by bonding films to both surfaces of a body member having an opening that is to a part of the flow channel.

In the analysis apparatus 100 of the present embodiment, an antigen, which is a substance to be detected, and the fluorescently labeled antibody are bound to each other by an antigen-antibody reaction, and fluorescence from an excited fluorescent label is detected. Therefore, the detection unit has a configuration of detecting fluorescence through irradiation with excitation light. However, the analysis apparatus of the technology of the present disclosure is not limited to a configuration in which fluorescence from a fluorescent label is detected, and may be configured to detect an absorbance of a substance generated by a reaction between a substance to be detected and a reagent.

Modification examples of the analysis apparatus 100 will be described with reference to FIGS. 7 to 11. In FIGS. 7 to 11, the same components as the components shown in FIG. 1 are denoted by the same reference numerals. In FIGS. 7 to 11, the measurement chip 10 is further simplified, and the electrophoresis mechanism 50 and the light detection unit 60 are omitted in whole or in part.

In the analysis apparatus 100, the heat conduction member 70 is a single plate-like member in FIG. 1, but, as shown in FIG. 7, the analysis apparatus 100 may comprise a plate-like member 71 and a film-like member 72 having higher flexibility than the plate-like member 71, as a heat conduction member 70A, instead of the heat conduction member 70. In this case, in a case where the measurement chip 10 is placed on the support plate 40 and supported by the support plate 40 such that the detection site 30 matches the opening 42, the film-like member 72 comes into contact with the measurement chip 10.

As described above, in a case where the heat conduction member 70A is formed of the plate-like member 71 and the film-like member 72, the heat conduction member 70A need only have a thermal conductivity of 1.0 W/m·K or more and a light transmittance of 60% or more as a whole. The film-like member 72 need only be made of any transparent and flexible material, such as transparent rubber or gel. It is preferable that the film-like member 72 alone also has a thermal conductivity of 1.0 W/m·K or more. In addition, a thickness of the film-like member 72 is preferably 300 μm or less.

By bringing the highly flexible film-like member 72 into contact with the measurement chip 10, the adhesiveness between the film-like member 72 and the measurement chip 10 can be improved, and, as a result, the heat dissipation efficiency can be improved.

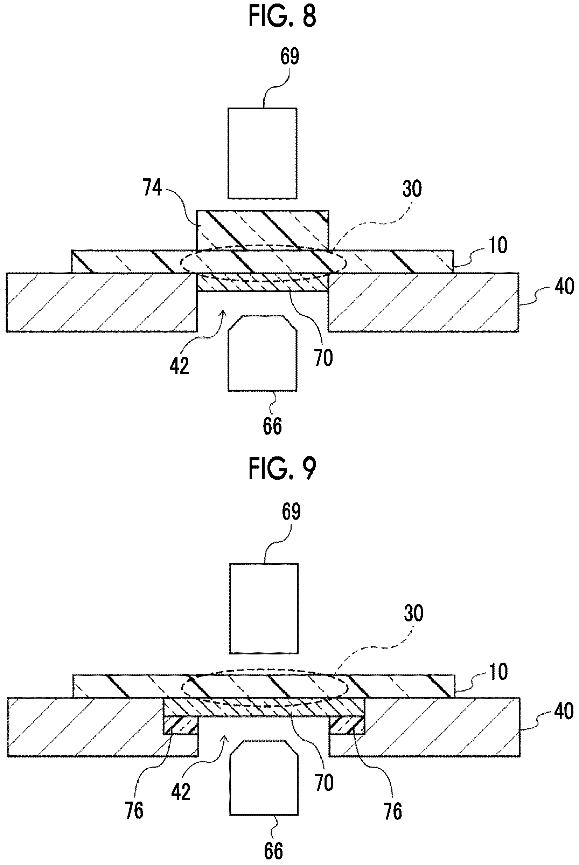

As shown in FIG. 8, in addition to the heat conduction member 70 (here, referred to as a first heat conduction member 70) disposed between the objective lens 66 and the measurement chip 10, a heat conduction member 74 (hereinafter, referred to as a second heat conduction member 74) disposed to face the heat conduction member 70 may be provided. The second heat conduction member 74 has a thermal conductivity of 1.0 W/m·K or more, as with the first heat conduction member 70. Note that, unlike the first heat conduction member 70, the light transmittance is not required.

Since the heat conduction members 70 and 74 are provided on both surfaces of the measurement chip 10 with respect to the detection site 30, the heat dissipation efficiency can be further improved as compared with a case where the heat conduction member is provided on only one surface. In a case where the measurement chip 10 has a form in which films are provided on both surfaces, the effect of improving the heat dissipation efficiency is particularly high.

In addition, as shown in FIG. 9, the analysis apparatus 100 may further comprise a gel-like or paste-like material 76 having a thermal conductivity of 1.0 W/m·K or more between the heat conduction member 70 and the support plate 40. It is particularly preferable that the thermal conductivity of the gel-like or paste-like material 76 is equal to or higher than the thermal conductivity of the heat conduction member 70. The gel-like or paste-like material 76 is, for example, a thermally conductive grease.

By applying the gel-like or paste-like material 76 to a contact portion between the heat conduction member 70 and the support plate 40, the heat dissipation efficiency from the heat conduction member 70 to the support plate 40 can be increased.

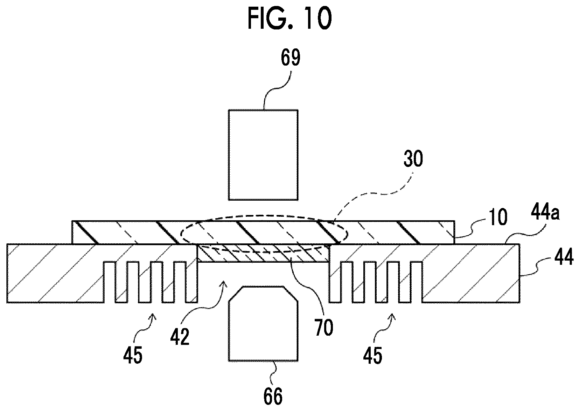

In addition, as shown in FIG. 10, instead of the support plate 40, a support plate 44 comprising fins 45 on a surface other than a support surface 44a that supports the measurement chip 10 may be provided. In the example shown in FIG.

10, the fins 45 are provided on a back side of the support surface 44a in at least a part of a region surrounding an opening 42 of the support plate 44.

By providing the fins 45, a surface area can be increased, and heat can be efficiently dissipated.

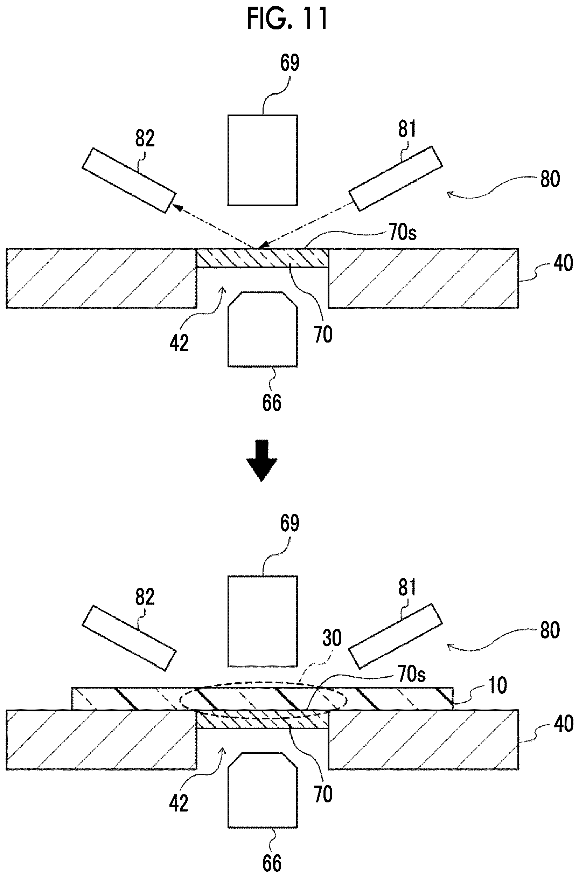

Further, as shown in FIG. 11, the analysis apparatus 100 may have a cleaning mechanism 80 that cleans a surface 70s of the heat conduction member 70 that comes into contact with the measurement chip 10. The cleaning mechanism 80 comprises, for example, an air blower 81 and a suction device 82. As shown in an upper diagram of FIG. 11, before the measurement chip 10 is placed on the heat conduction member 70, air is blown onto the surface 70s by the air blower 81 to remove dust on the surface 70s. The suction device 82 is disposed at a position where the air blown by the air blower 81 is reflected by the surface 70s, and sucks the dust removed from the surface 70s together with the air. After the surface 70s is cleaned, the measurement chip 10 is placed on the heat conduction member 70 as shown in a lower diagram of FIG. 11.

By removing the dust from the surface 70s of the heat conduction member 70 before placing the measurement chip 10, it is possible to suppress scratches on the surface of the film 14 at the detection site 30 of the measurement chip 10 and on the surface 70s of the heat conduction member 70. It is possible to suppress the influence on detection, such as focus errors caused by dust and scratches, and the occurrence of poor contact between the detection site 30 and the measurement chip 10.

Examples

Hereinafter, an experimental method and experimental results for verifying the effects of the technology of the present disclosure will be described using analysis apparatuses of specific examples and a comparative example. The effect of removing Joule heat, the effect of improving measurement performance, and effect of shortening measurement time were verified.

(Experimental Method)

In the experiment, a measurement chip 10 was used in which a flow channel 20 was formed by sealing a body member 12 formed with a groove 22 and wells 23 with a film 14. Analysis apparatuses of Examples 1 and 2 had substantially the same configuration as the analysis apparatus 100 shown in FIG. 1. The measurement chip 10 was placed on the support plate 40 in a posture in which the film 14 was used as a bottom surface, and the heat conduction member 70 was pressed against the detection site 30 of the measurement chip 10. In Example 1, cover glass (manufacturer unknown, thickness: 400 $\mu$m, thermal conductivity: 1.1 W/m·K) was used as the heat conduction member 70, and, in Example 2, sapphire glass (University Wafer, Inc., #1251, thickness: 430 $\mu$m, thermal conductivity: 37 W/m·K) was used as the heat conduction member 70. On the other hand, an analysis apparatus of Comparative Example was configured in the same manner as the analysis apparatuses of Examples 1 and 2 except that the heat conduction member 70 was not provided. That is, in Comparative Example, the detection site 30 of the measurement chip 10 was exposed to air (thermal conductivity: 0.024 W/m·K), in other words, the detection site 30 was brought into contact with air.

A sample in which AFP and a fluorescent dye were bound by an antigen-antibody reaction was concentrated by isotachophoresis and introduced into a flow channel filled with an electrophoresis gel containing lectin. Thereafter, a voltage was applied to the flow channel filled with the electrophoresis gel to carry out capillary gel electrophoresis of the sample. Here, as AFP, a mixture containing a lectin non-binding fraction (AFP-L1) and a lectin binding fraction (AFP-L3) at a ratio of 8:2 was used. AFP-1 and AFP-3 are separated based on differences in their lectin-binding affinity. AFP-L1 and AFP-L3 were each detected by irradiating the detection site 30 with excitation light and measuring a change in fluorescence intensity over time.

Separation performance R of AFP-1 and AFP-3 was quantitatively evaluated from the measured change in fluorescence intensity over time according to Equation 1. Here, $t_{R1}$ and $t_{R2}$ are detection time points of the respective peaks ($t_{R1} < t_{R2}$), and $W_{0.5h1}$ and $W_{0.5h2}$ are halfwidths of the respective peaks.

$$R = 1.18 \times \left( \frac{t_{R2} - t_{R1}}{W_{0.5h1} + W_{0.5h2}} \right) \quad \text{(Equation 1)}$$

The separation performance R is desirably 1.05 or more and particularly preferably 1.1 or more.

(Experimental Result)

-Joule Heat Removal-

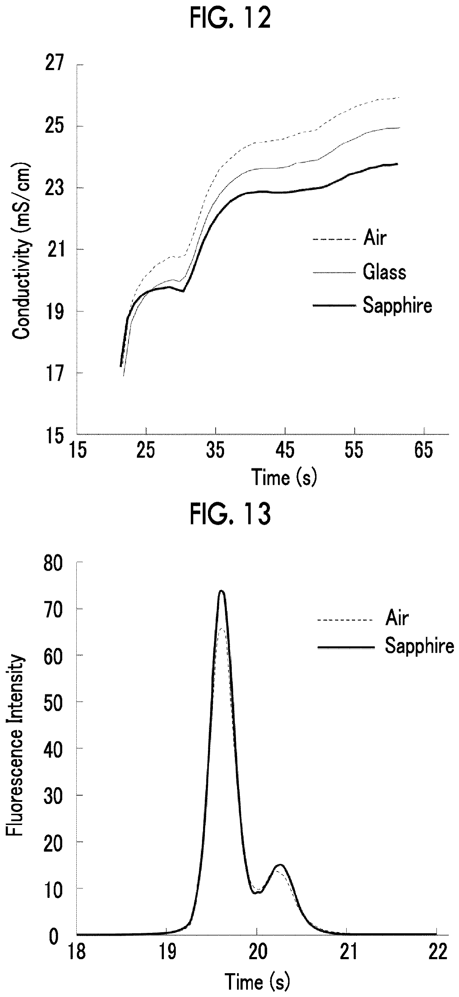

A change in conductivity (mS/cm) of the electrophoresis gel was obtained. The conductivity of the electrophoresis gel was calculated from an applied voltage, a current flowing through the flow channel, and flow channel dimensions. The result is shown in FIG. 12. In FIG. 12, Air indicated by a broken line is Comparative Example, Glass indicated by a thin solid line is Example 1, and Sapphire indicated by a thick solid line is Example 2. The electrophoresis gels has a property that its conductivity decreases as the temperature decreases. As shown in FIG. 12, an increase in conductivity with the passage of time means that the temperature of the electrophoresis gel increases with the passage of time. This is considered to be due to the effect of Joule heat generated by electrophoresis. On the other hand, in Examples 1 and 2 in which the heat conduction member 70 was provided, it was found that a rate of increase in conductivity with the passage of time was small and the increase in temperature of the electrophoresis gel was suppressed, as compared with Comparative Example 1. In addition, as shown in FIG. 12, as a thermal conductivity of an object in contact with the detection site 30 of the measurement chip 10 increases, the rate of increase in conductivity of the electrophoresis gel decreases. The result shown in FIG. 12 shows that, by bringing the heat conduction member 70 into contact with the detection site 30 of the measurement chip 10, Joule heat generated during electrophoresis is efficiently removed, and an increase in electrophoresis gel temperature is suppressed, as compared with a case where the detection site 30 is exposed to air.

-Improvement of Measurement Performance-

In a case where the temperature of the electrophoresis gel increases due to Joule heat or the like, the binding affinity between AFP-L3 and lectin decreases, and the separation performance decreases. It was confirmed whether the separation performance could be maintained under a high voltage by removing Joule heat using the heat conduction member 70. FIG. 13 shows a change over time in fluorescence intensity measured while carrying out capillary gel electrophoresis by applying a voltage of 2000 V, for a case where sapphire glass was used as the heat conduction member 70 (Example 2: Sapphire) and a case where no heat conduction member 70 was provided (Comparative Example: Air). Regarding the change over time in fluorescence intensity obtained in FIG. 13, peak separation was performed, and the separation performance R was calculated based on the above (Equation 1). As a result, in Example 2, a result was obtained in which the separation performance was higher than that of Comparative Example. It is considered that the provision of sapphire glass enabled removal of Joule heat, enhancing the binding affinity between AFP-L3 and lectin.

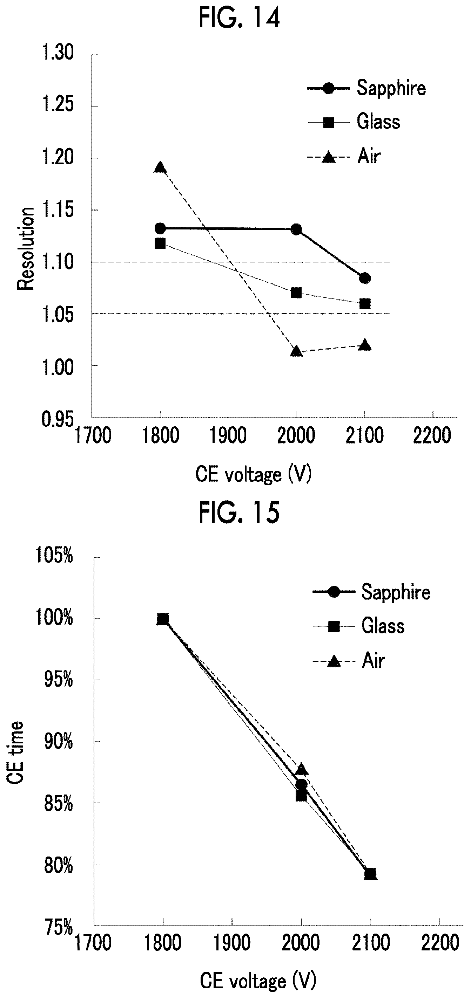

FIG. 14 shows results of deriving a relationship between the voltage (CE voltage) during capillary gel electrophoresis and the separation performance R for Example 1, Example 2, and Comparative Example. The separation performance R shown in FIG. 14 is an average value (n = 5) of resolutions R obtained by performing the measurement five times for each voltage. In a case where the voltage during capillary gel electrophoresis was 1800 V, sufficient separation performance was obtained in any case (R > 1.1), but, in a case where the voltage was increased to 2000 V, the separation performance was significantly reduced (R < 1.05) in Comparative Example in a case where no heat conduction member 70 was provided. On the other hand, in Examples 1 and 2, the separation performance was maintained even in a case where the voltage was increased to 2100 V (R ≥ 1.05). In addition, in a case where the voltage was increased, the separation performance was maintained at a higher level in Example 2 using sapphire glass having a high thermal conductivity than in Example 1 using cover glass.

The improvement of the separation performance means the improvement of the measurement performance, and is a result showing the effect of improving the measurement performance by providing the heat conduction member 70.

-Shortening of Measurement Time-

Increasing the voltage during capillary gel electrophoresis increases the migration speed of the sample, thereby shortening the measurement time. FIG. 15 shows a change in measurement time with respect to the voltage in capillary gel electrophoresis, with a measurement time (CE time) in a case where the voltage (CE voltage) during electrophoresis was 1800 V as a reference (100%). The standardized measurement time shown in FIG. 15 is a value obtained by using an average value (n = 5) of measurement times in a case where the measurement was performed five times for each voltage. Regardless of the presence or absence and the material of the heat conduction member 70, the measurement time showed a similar shortening tendency with the increase in voltage during electrophoresis. In all of Example 1, Example 2, and Comparative Example, by setting the voltage during electrophoresis to 2000 V, the measurement time could be shortened by about 15% as compared with a case where the voltage was 1800 V.

-Evaluation Result-

Table 2 shows evaluation results in a case where the voltage during electrophoresis was 2000 V. Each item was evaluated according to the following standards.

[Measurement Performance]

In practice, a rating of 2 or higher is desirable.

1: Insufficient separation performance (R < 1.05)

2: Minor impact despite deterioration in separation performance (1.05 ≤ R ≤ 1.1)

3: Sufficient separation performance (R > 1.1)

[Measurement Time]

In practice, a rating of 2 or higher is desirable.

1: No shortening achievable (shortening rate of less than 10%)

2: Shortening achievable (shortening rate of 10% or more and less than 20%)

3: Significant shortening achievable (shortening rate of 20% or more)

[Overall Evaluation]

The product of the measurement performance and the measurement time was used as an overall evaluation. In practice, a rating of 4 or higher is desirable.

Less than 4: Issue in either measurement performance or measurement time

4 or more and less than 6: Minor impact despite some issues in either measurement performance or measurement time

6 or more: Favorable measurement performance and measurement time

The evaluation results of Examples 1 and 2 and Comparative Example are summarized in Table 2.

[Table 2]

|  | Heat conduction member | Thermal conductivity (W/m·K) | Measurement performance | Measurement time | Overall evaluation |
|---|---|---|---|---|---|
| Comparative Example | None (air) | 0.024 | 1 | 2 | 2 |
| Example 1 | Glass | 1.1 | 2 | 2 | 4 |
| Example 2 | Sapphire glass | 37 | 3 | 2 | 6 |

As described above, it has been clarified that the analysis apparatus comprising the heat conduction member can remove Joule heat, and, as a result, it is possible to improve the measurement performance and shorten the measurement time. In a case where the thermal conductivity of the heat conduction member is 1.0 W/m·K or more, the effect of improving the measurement performance and the effect of shortening the measurement time can be obtained, and, in a case where the thermal conductivity is 35 W/m·K or more, the effects are remarkable.

The following appendices are further disclosed with respect to the above embodiment.

(Appendix 1)

An analysis apparatus that uses a measurement chip equipped with a flow channel containing a gel for electrophoresis and that optically detects a test target substance in a specimen supplied to the flow channel of the measurement chip while carrying out component separation using electrophoresis on the specimen, the analysis apparatus comprising:

an electrophoresis mechanism that subjects the specimen supplied to the flow channel to electrophoresis;

a light detection unit including a photodetector that detects light from a detection site in the flow channel and an objective lens that guides the light from the detection site to the photodetector;

a support plate that supports the measurement chip and that has an opening through which the light from the detection site is transmitted to the objective lens; and

a heat conduction member that is disposed in the opening of the support plate and that has thermal conductivity for conducting heat from the detection site to the support plate and light transmittance for transmitting the light, the heat conduction member having a thermal conductivity of 1.0 W/m·K or more and a light transmittance of 60% or more.

(Appendix 2)

The analysis apparatus according to Appendix 1,
in which the flow channel in the measurement chip is a microchannel.

(Appendix 3)

The analysis apparatus according to Appendix 1 or 2, further comprising:
a plate temperature control unit that controls a temperature of the support plate.

(Appendix 4)

The analysis apparatus according to any one of Appendices 1 to 3, further comprising:
a lens temperature control unit that controls a temperature of the objective lens.

(Appendix 5)

The analysis apparatus according to any one of Appendices 1 to 4,

in which the heat conduction member includes a plate-like member and a film-like member having higher flexibility than the plate-like member, and
in a case where the measurement chip is supported to face the objective lens, the film-like member comes into contact with the measurement chip.

(Appendix 6)

The analysis apparatus according to any one of Appendices 1 to 5,
in which, in a case where the heat conduction member is a first heat conduction member, the analysis apparatus further comprises a second heat conduction member having a thermal conductivity of 1.0 W/m·K or more, which is in contact with a surface of the measurement chip opposite to a surface in contact with the first heat conduction member.

(Appendix 7)

The analysis apparatus according to any one of Appendices 1 to 6, further comprising:
a gel-like or paste-like material having a thermal conductivity of 1.0 W/m·K or more between the heat conduction member and the support plate.

(Appendix 8)

The analysis apparatus according to any one of Appendices 1 to 7,
in which the support plate includes a fin on a surface other than a support surface that supports the measurement chip.

(Appendix 9)

The analysis apparatus according to any one of Appendices 1 to 8, further comprising:
a cleaning mechanism that cleans a surface of the heat conduction member that comes into contact with the measurement chip.

(Appendix 10)

The analysis apparatus according to any one of Appendices 1 to 9,

in which the light detection unit includes a light source that outputs excitation light to be emitted to the detection site, and
the photodetector detects fluorescence from the detection site.

The disclosure of Japanese Patent Application No. 2023-058002 filed on March 31, 2023 is incorporated in the present specification by reference. All documents, patent applications, and technical standards mentioned in the present specification are incorporated herein by reference to the same extent as in a case in which each document, each patent application, and each technical standard are specifically and individually described by being incorporated by reference.

Explanation of References

10: measurement chip
12: body member
12a: one surface of body member
12b: other surface of body member
12B, 12C: support rib
14: film
20: microchannel
22: groove
23, 23a to 23f: well
24: through-hole
25: cylindrical portion
26: electrophoresis gel
30: detection site
32: arrow indicating flow of heat
40, 44: support plate
42: opening
44a: support surface
45: fin
50: electrophoresis mechanism
52: electrode
54: high-voltage power supply
60: light detection unit
62: light source
64: photodetector
66: objective lens
68: dichroic mirror
69: trap
70, 70A: heat conduction member (first heat conduction member)
70s: surface of heat conduction member 70
71: plate-like member
72: film-like member
74: second heat conduction member
76: paste-like material
80: cleaning mechanism
81: air blower
82: suction device
90: plate temperature control unit
92: lens temperature control unit
94: trap temperature control unit
100: analysis apparatus
A: antigen

B: fluorescently labeled antibody
C: immune complex
D: DNA-labeled antibody
E: sandwich-type immune complex
L1: excitation light
L2: fluorescence

**Claims**

1. An analysis apparatus that uses a measurement chip equipped with a flow channel containing a gel for electrophoresis and that optically detects a test target substance in a specimen supplied to the flow channel of the measurement chip while carrying out component separation using electrophoresis on the specimen, the analysis apparatus comprising:

   an electrophoresis mechanism that subjects the specimen supplied to the flow channel to electrophoresis;
   a light detection unit including a photodetector that detects light from a detection site in the flow channel and an objective lens that guides the light from the detection site to the photodetector;
   a support plate that supports the measurement chip and that has an opening through which the light from the detection site is transmitted to the objective lens; and
   a heat conduction member that is disposed in the opening of the support plate and that has thermal conductivity for conducting heat from the detection site to the support plate and light transmittance for transmitting the light, the heat conduction member having a thermal conductivity of 1.0 W/m·K or more and a light transmittance of 60% or more.

2. The analysis apparatus according to claim 1,
   wherein the flow channel in the measurement chip is a microchannel.

3. The analysis apparatus according to claim 1 or 2, further comprising:
   a plate temperature control unit that controls a temperature of the support plate.

4. The analysis apparatus according to claim 3, further comprising:
   a lens temperature control unit that controls a temperature of the objective lens.

5. The analysis apparatus according to claim 1 or 2,

   wherein the heat conduction member includes a plate-like member and a film-like member having higher flexibility than the plate-like member, and
   in a case where the measurement chip is supported to face the objective lens, the film-like member comes into contact with the measurement chip.

6. The analysis apparatus according to claim 1 or 2,
   wherein, in a case where the heat conduction member is a first heat conduction member, the analysis apparatus further comprises a second heat conduction member having a thermal conductivity of 1.0 W/m·K or more, which is in contact with a surface of the measurement chip opposite to a surface in contact with the first heat conduction member.

7. The analysis apparatus according to claim 1 or 2, further comprising:
   a gel-like or paste-like material having a thermal conductivity of 1.0 W/m·K or more between the heat conduction member and the support plate.

8. The analysis apparatus according to claim 1 or 2,
   wherein the support plate includes a fin on a surface other than a support surface that supports the measurement chip.

9. The analysis apparatus according to claim 1 or 2, further comprising:
   a cleaning mechanism that cleans a surface of the heat conduction member that comes into contact with the measurement chip.

10. The analysis apparatus according to claim 1 or 2,

wherein the light detection unit includes a light source that outputs excitation light to be emitted to the detection site, and
the photodetector detects fluorescence from the detection site.

FIG. 1

## FIG. 2

## FIG. 3

# FIG. 4

# FIG. 5

## FIG. 6

## FIG. 7

## FIG. 8

## FIG. 9

## FIG. 10

## FIG. 11

## FIG. 12

## FIG. 13

## FIG. 14

## FIG. 15

## INTERNATIONAL SEARCH REPORT

| International application No. |
|---|
| **PCT/JP2024/007096** |

**A. CLASSIFICATION OF SUBJECT MATTER**

***G01N 21/64***(2006.01)i; ***G01N 1/10***(2006.01)i; ***G01N 35/08***(2006.01)i; ***G01N 37/00***(2006.01)i
FI:   G01N21/64 F; G01N35/08 A; G01N37/00 101; G01N1/10 G

According to International Patent Classification (IPC) or to both national classification and IPC

**B. FIELDS SEARCHED**

Minimum documentation searched (classification system followed by classification symbols)

G01N21/64; G01N1/10; G01N35/08; G01N37/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| Y | JP 11-271273 A (JAPAN SCIENCE AND TECHNOLOGY CORPORATION) 05 October 1999 (1999-10-05) see paragraphs [0001]-[0022], fig. 1-8 | 1-3, 8-10 |
| A | | 4-7 |
| Y | JP 9-281076 A (NIPPON TELEGRAPH AND TELEPHONE CORPORATION) 31 October 1997 (1997-10-31) paragraph [0002] | 1-3, 8-10 |
| A | | 4-7 |
| Y | JP 11-148919 A (BUNSHI BAIOHOTONIKUSU KENKYUSHO KK) 02 June 1999 (1999-06-02) paragraph [0037] | 1-3, 8-10 |
| A | | 4-7 |

☑ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 April 2024** | **07 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

| International application No. |
| --- |
| **PCT/JP2024/007096** |

| C. | DOCUMENTS CONSIDERED TO BE RELEVANT | |
| --- | --- | --- |
| Category* | Citation of document, with indication, where appropriate, of the relevant passages | Relevant to claim No. |
| Y | JP 2002-520616 A (HANNING INSTRUMENTS AB) 09 July 2002 (2002-07-09) paragraph [0067] | 1-3, 8-10 |
| A | | 4-7 |
| Y | JP 2010-530057 A (FUJIFILM CORPORATION) 02 September 2010 (2010-09-02) paragraphs [0005], [0033], [0046] | 2-3, 8-10 |
| A | | 4-7 |
| A | JP 2003-337117 A (HITACHI HIGH-TECHNOLOGIES CORPORATION) 28 November 2003 (2003-11-28) | 1-10 |
| A | JP 2002-228586 A (HITACHI, LTD.) 14 August 2002 (2002-08-14) | 1-10 |
| A | JP 2000-338086 A (HITACHI, LTD.) 08 December 2000 (2000-12-08) | 1-10 |
| A | JP 7-503068 A (TORRES, Anthony R.) 30 March 1995 (1995-03-30) | 1-10 |
| A | US 2013/0299352 A1 (NATIONAL SUN YAT-SEN UNIVERSITY) 14 November 2013 (2013-11-14) | 1-10 |

Form PCT/ISA/210 (second sheet) (July 2022)

## INTERNATIONAL SEARCH REPORT
### Information on patent family members

International application No.

**PCT/JP2024/007096**

| Patent document cited in search report | | | Publication date (day/month/year) | Patent family member(s) | | | Publication date (day/month/year) |
|---|---|---|---|---|---|---|---|
| JP | 11-271273 | A | 05 October 1999 | (Family: none) | | | |
| JP | 9-281076 | A | 31 October 1997 | (Family: none) | | | |
| JP | 11-148919 | A | 02 June 1999 | (Family: none) | | | |
| JP | 2002-520616 | A | 09 July 2002 | US | 6661510 | B1 | |
| | | | | column 13, line 28 | | | |
| | | | | WO | 2000/004371 | A1 | |
| | | | | EP | 1097370 | A1 | |
| JP | 2010-530057 | A | 02 September 2010 | US | 2010/0108514 | A1 | |
| | | | | paragraphs [0004], [0042], [0055] | | | |
| | | | | WO | 2008/121761 | A1 | |
| | | | | EP | 2142918 | A1 | |
| JP | 2003-337117 | A | 28 November 2003 | US | 2004/0000481 | A1 | |
| | | | | WO | 2003/098189 | A2 | |
| | | | | EP | 1509763 | A1 | |
| | | | | CA | 2485693 | A1 | |
| | | | | AU | 2003239516 | A | |
| JP | 2002-228586 | A | 14 August 2002 | (Family: none) | | | |
| JP | 2000-338086 | A | 08 December 2000 | (Family: none) | | | |
| JP | 7-503068 | A | 30 March 1995 | US | 5395502 | A | |
| | | | | US | 5468359 | A | |
| | | | | US | 5784154 | A | |
| | | | | WO | 1993/014389 | A1 | |
| | | | | EP | 621947 | A1 | |
| US | 2013/0299352 | A1 | 14 November 2013 | TW | 201346257 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9288091 A
- JP H9288091 A

- JP 2023058002 A